# EUROPÄISCHE PATENTSCHRIFT

(11) **EP 0 568 730 B1**
(45) Veröffentlichungstag und Bekanntmachung des Hinweises auf die Patenterteilung: **22.10.1997**
(21) Anmeldenummer: 92118919.7
(22) Anmeldetag: 05.11.1992
(51) Int. Cl.: B23Q 17/00

(54) **Positionsüberwachungseinrichtung**
Position control device
Dispositif de contrôle de position

(30) Priorität: 04.05.1992 DE 4214320
(43) Veröffentlichungstag der Anmeldung: 10.11.1993
(73) Patentinhaber: ERWIN HALDER KG, D-88480 Achstetten-Bronnen (DE)
(72) Erfinder: Halder, Werner, W-7959 Achstetten 3 - Bronnen (DE)
(74) Vertreter: Dziewior, Joachim, Dipl.-Phys. Dr.

(56) Entgegenhaltungen:
- EP-A- 0 151 709
- US-A- 3 353 402
- US-A- 3 603 203

## Beschreibung

Die Erfindung betrifft eine Positionsüberwachungseinrichtung zur Verwendung an einer Werkstückaufnahme, die zur Halterung und Spannung von insbesondere einer numerisch gesteuerten Werkstückbearbeitungsmaschine zuzuführenden Werkstücken dient, mit Positionierelementen, die an die Werkstückaufnahme anschließbar und mit Anlageflächen für das Werkstück versehen sind, wobei die Positionierelemente mit einem Strömungskanal für ein gasförmiges Medium versehen sind, dessen dem Werkstück zugewandte Mündung durch das Werkstück direkt oder durch ein dem Werkstück anliegendes Druckstück schließbar ist und dessen anderes Ende über eine Schlauchleitung mit einer Druckspeiseeinrichtung verbunden ist, die für jedes angeschlossene Positionierelement mit einer Drosseleinrichtung und einem der Drosseleinrichtung in Strömungsrichtung des Mediums nachgeschalteten Drucksensor versehen ist, wobei der Drucksensor bei Unterschreiten eines vorgegebenen Druckwertes eine Signaleinrichtung betätigt.

Werkstückbearbeitungsmaschinen sind in zunehmenden Maße so aufgebaut, daß die Zuführung der die Werkstücke bearbeitenden Werkzeuge in horizontaler Richtung erfolgt. Dies bedeutet, daß die zu bearbeitenden Werkstücke an einer vertikal angeordneten Grundplatte ausgerichtet und befestigt werden müssen. Die Werkstücke müssen daher beim Anschluß an die Grundplatte gegen die Positionierelemente gedrückt und während des Spannens in dieser Lage gehalten werden. Im Gegensatz zu einer horizontalen Anordnung der Werkstücke, bei welcher diese infolge der Schwerkraft stets den Positionierelementen anliegen, muß hier nach erfolgtem Spannvorgang sicher gestellt werden, daß die Anlage der Werkstücke an den Positionierelementen gegeben ist. Hierzu dienen dünne Metallfolien, mit welchen sich ein eventuell zwischen dem Werkstück und dem Positionierelement bestehender Spalt aufspüren läßt. Diese Überprüfung stellt jedoch einen bei schlechter Zugänglichkeit des Positionierelements mühsamen, darüber hinaus zeitaufwendigen Vorgang dar.

Aus der US 3 353 402 ist eine Positionsüberwachungseinrichtung mit Positionierelementen der eingangs genannten Art bekannt, die einen Strömungskanal aufweisen, der von einer Flüssigkeit durchströmt wird. Das Positionierelement ist mündungsseitig kegelstumpfartig ausgebildet. Die Mündung des Strömungskanals ist an ein korrespondierend ausgebildetes Werkstück oder Druckstück anschließbar. An der der Mündung gegenüber liegenden Seite des Positionierelements ist eine Schlauchleitung angeschlossen, die das Positionierelement über eine Drosseleinrichtung mit einem Drucksensor und einer Signaleinrichtung verbindet.

Der Erfindung liegt die Aufgabe zugrunde, eine Positionsüberwachungseinrichtung zur Verwendung an einer Werkstückaufnahme zu schaffen, die bei einfachem Aufbau und betriebssicherer Arbeitsweise eine zuverlässige Überprüfung und Überwachung der Anlage der Werkstücke an den Positionierelementen ermöglicht, insbesondere auch wenn das Positionierelement oder das Werkstück keine plane Oberfläche aufweist.

Diese Aufgabe wird nach der Erfindung bei einer derartigen Vorrichtung dadurch gelöst, daß das Positionierelement als Pendelauflage ausgebildet ist, bei welcher eine die Anlagefläche bildende, abgeflachte Kugel in einem die Kugel teilweise umgreifenden Lagerkörper angeordnet ist, wobei die Kugel in zur Anlagefläche im wesentlichen senkrechter Richtung mit geringem Spiel beweglich ist und in ihrer zum Werkstück hin verstellten Lage einen Ringspalt zwischen ihrer Oberfläche und der Innenmantelfläche des Lagerkörpers für den Durchtritt des gasförmigen Mediums öffnet.

Diese Ausbildung hat insbesondere den Vorteil, daß die zur Anlage am Werkstück kommende Anlagefläche nicht plan sein muß, wie es erforderlich ist, wenn der Strömungskanal unmittelbar in die Anlagefläche mündet. Insbesondere kann die Anlagefläche hier als Riffelfläche ausgebildet sein. Darüber hinaus kann hierbei auch die Anlage am Positionierelement solcher Werkstücke überwacht werden, die eine - noch - rauhe Oberfläche aufweisen. Beim Spannen dieser zu bearbeitenden Werkstücke muß dann lediglich die für jedes Positionierelement vorgesehene Signaleinrichtung beachtet werden, um sicher zu gehen, daß das Werkstück in der vorgeschriebenen Lage an der Grundplatte angeschlossen und gespannt ist. Dabei besteht durch eine entsprechende logische Verknüpfung der einzelnen Signaleinrichtungen darüber hinaus die Möglichkeit, lediglich dann ein Signal zu geben, wenn an wenigstens einem der Positionierelmenet keine ausreichende Anlage des Werkstücks gegeben ist.

Die Signaleinrichtung kann darüber hinaus auch zur Steuerung der Werkstückbearbeitungsmaschine herangezogen werden, wobei beispielsweise eine Abschaltung der Maschine eingeleitet werden kann, wenn z. B. während der Bearbeitung eines Werkstücks sich dieses aus der vorgesehenen Lage löst, also mit wenigstens einem der Positionierelemente nicht mehr in Berührung steht. Auf diese Weise lassen sich Schäden sowohl am Werkstück wie auch an der Werkstückbearbeitungsmaschine vermeiden.

In bevorzugter Ausführungsform der Erfindung weist der Strömungskanal an seinem mündungsseitigen Ende einen Abschnitt mit vermindertem Querschnitt auf. Auf diese Weise wird bis unmittelbar vor der Anlagefläche ein im wesentlichen konstanter Druck im Strömungskanal aufrecht erhalten.

Weiter sieht die Erfindung in zweckmäßiger Ausgestaltung vor, daß die Querschnittsfläche des Strömungskanals an der Mündung gegenüber der Anlagefläche um etwa einen Faktor 100 kleiner ist. Hierdurch werden die Strömungsverhältnisse so eingestellt, daß in dem zu überwachenden Distanzbereich zwischen der Anlagefläche und dem Werkstück eine auswertbare Druckdifferenz auftritt.

Ferner ist es von Vorteil, wenn der Strömungskanal im Positionierelement rechtwinklig verläuft, wobei das der Mündung abgewandte Ende mit einem Anschlußnippel für die Schlauchleitung versehen ist. Auf diese Weise können die Positionierelemente in üblicher Weise an der Grundplatte befestigt werden, ohne daß Einschränkungen hinsichtlich der Anordnung wegen der anzuschließenden Schläuche hingenommen werden müssen. Vielmehr verlaufen diese in zur Grundfläche paralleler Ebene.

Der Lagerkörper kann zweckmäßigerweise mit wenigstens einer Austrittsöffnung versehen sein, die in Strömungsrichtung des Mediums hinter dem Ringspalt in dem die Kugel umgreifenden Kragen angeordnet ist. Dadurch ist ein Austritt des gasförmigen Mediums auch dann gewährleistet, wenn der Kragen die Kugel dichtend umschließt.

Im folgenden wird die Erfindung an in der Zeichnung dargestellten Ausführungsbeispielen näher erläutert; es zeigen:
- Fig. 1: eine schematische Darstellung lediglich der Positionsüberwachungseinrichtung an der Werkstückaufnahme,
- Fig. 2: ein Positionierelement in einer bekannten Ausführungsform und
- Fig. 3: eine erfindungsgemäße Ausführungsform eines Positionierelements.

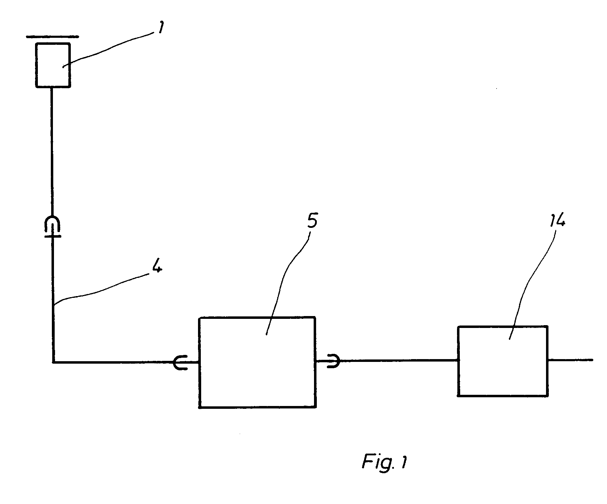

Die Positionsüberwachungseinrichtung, die zur Kontrolle der Anlage der Werkstücke an Positionierelementen 1 einer Werkstückaufnahme dient, ist in der Fig. 1 lediglich schematisch dargestellt. Die nicht wiedergegebene Werkstückaufnahme ist zur Halterung und Spannung von Werkstücken vorgesehen, die insbesondere einer numerisch gesteuerten Werkstückbearbeitungsmaschine zuzuführen sind. Dabei sind die Positionierelemente 1 an einer Grundplatte oder dergl. angeschlossen, wozu diese mit rasterartig angeordneten rechtwinklig zueinander verlaufenden T-Nuten versehen sein kann, und mit einer Anlagefläche 1.1 für das Werkstück versehen.

Die Positionierelemente 1 sind im einzelnen mit einem Strömungskanal 2 für ein gasformiges Medium versehen, dessen dem Werkstück zugewandte Mündung 3 entweder durch das Werkstück direkt oder aber durch ein dem Werkstück anliegendes Druckstück schließbar ist. Das andere Ende des Strömungskanals 2 ist über eine Schlauchleitung 4 mit einer Druckspeiseeinrichtung 5 verbunden, die für jedes angeschlossene Positionierelement 1 eine im einzelnen nicht dargestellte Drosseleinrichtung aufweist. Der Drosseleinrichtung ist in Strömungsrichtung des Mediums ein ebenfalls nicht dargestellter Drucksensor nachgeschaltet, durch den bei Unterschreiten eines vorgegebenen Druckwertes eine Signaleinrichtung betätigt wird. Die Drosseleinrichtung und der Drucksensor sind in der Schemadarstellung der Fig. 1 Bestandteil der Druckspeiseeinrichtung 5. Der Druckspeiseeinrichtung 5 ist noch ein ebenfalls nur schematisch dargestelltes Filter-Regelventil 14 vorgeschaltet.

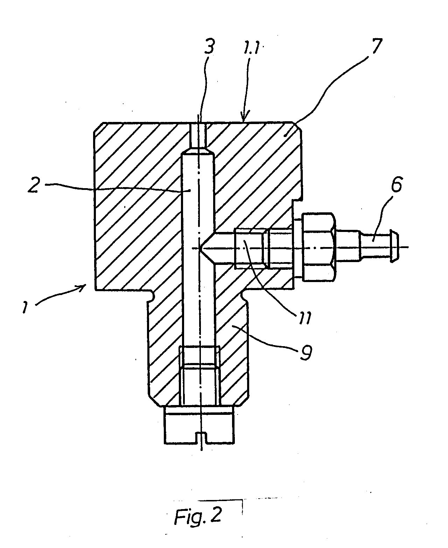

Liegt das Werkstück der Anlagefläche 1.1 plan an, so ist die Mündung 3 des Strömungskanals 2 nahezu vollständig geschlossen, so daß sich im Strömungskanal 2 ein entsprechend hoher Druck aufbaut, der vom Drucksensor registriert wird. Liegt dagegen das Werkstück der Anlagefläche 11 nicht oder nicht vollständig an, so entweicht das gasförmige Medium durch die Mündung 3 des Strömungskanals 2 ins Freie, so daß im Strömungskanal 2 - bedingt durch die Drosseleinrichtung - ein wesentlich geringerer Druck herrscht. Dieser geringere Druck wird von dem Drucksensor wahrgenommen, der unterhalb einer gewissen Schaltschwelle dann die Signaleinrichtung betätigt. Auf diese Weise kann die vorgeschriebene Anlage des Werkstücks an der Anlagefläche 1.1 durch einfache Beobachtung der Signaleinrichtung überprüft werden. Dabei besteht weiter die Möglichkeit, durch die Signaleinrichtung eine Abschaltung der Werkstückbearbeitungsmaschine vorzunehmen, wenn nämlich während des Bearbeitungsvorgangs das Werkstück sich löst oder lockert, so daß ein hierdurch sonst zu erwartender Schaden am Werkstück bzw. an der Werkstückbearbeitungsmaschine vermieden werden kann. Ebenso kann dadurch das Anlaufen der Maschine verhindert werden, wenn das Werkstück von Anfang an nicht in der richtigen Lage gespannt wurde, so daß eine Bearbeitung bei nicht anliegendem Werkstück nicht erfolgen kann. Wie sich aus der Fig. 2 ergibt, weist der Strömungskanal 2 an seinem mündungsseitigen Ende einen Abschnitt mit vermindertem Querschnitt auf. Dabei ist die Querschnittsfläche des Strömungskanals 2 an der Mündung 3 in der Regel so gewählt, daß sie gegenüber der Anlagefläche 1.1 um etwa einen Faktor 100 kleiner ist. Der Strömungskanal 2 verläuft im Positionierelement 1 vorzugsweise rechtwinklig, wobei das der Mündung 3 abgewandte Ende mit einem Anschlußnippel 6 für die Schlauchleitung 4 versehen ist. Hierdurch können die Positionierelemente 1 in üblicher Weise an der Grundplatte angeschlossen werden, da die Schlauchleitungen 4 in zur Oberfläche der Grundplatte paralleler Ebene verlaufen und beliebig zwischen den Positionierelementen 1 verlegt werden können.

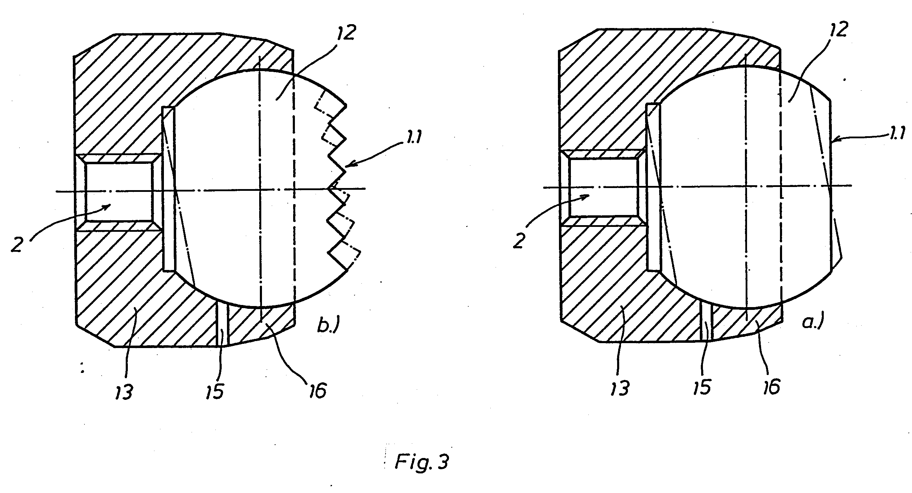

Das erfindungsgemäße Positionierelement ist als Pendelauflage ausgebildet, wie dies in Fig. 3 dargestellt ist. Hierbei ist eine die Anlagefläche 1.1 bildende, abgeflachte Kugel 12 in einem die Kugel teilweise umgreifenden Lagerkörper 13 angeordnet. Die Kugel 12 ist in in der Zeichnung nicht dargestellter Weise in zur Anlagefläche im wesentlichen senkrechter Richtung mit geringem Spiel beweglich. In ihrer zum Werkstück hin verstellten Lage öffnet die Kugel 12 einen Ringspalt zwischen ihrer Oberfläche und der Innenmantelfläche des Lagerkörpers 13, durch welchen das gasförmige Medium durchtreten kann. Die Kugel 12 bildet hierbei das die Mündung 3 schließende Druckstück. Bei vorschriftsmäßiger Anlage des Werkstücks an der Kugel 12 wird dagegen der Ringspalt geschlossen, wodurch dem Drucksensor nach Druckanstieg im Strömungskanal 2 die ordnungsgemäße Anlage des Werkstücks signalisiert wird. Durch diese Ausführungsform besteht auch die Möglichkeit, die Anlagefläche mit einer Riffelung zu versehen, wie dies in Fig. 3b dargestellt ist, bzw. auch die Anlage von solchen Werkstücken zu überwachen, die eine rauhe Oberfläche besitzen.

## Patentansprüche

1. Positionsüberwachungseinrichtung zur Verwendung an einer Werkstückaufnahme, die zur Halterung und Spannung von insbesondere einer numerisch gesteuerten Werkstückbearbeitungsmaschine zuzuführenden Werkstücken dient, mit Positionierelementen (1), die an die Werkstückaufnahme anschließbar und mit Anlageflächen (1.1) für das Werkstück versehen sind, wobei die Positionierelemente (1) mit einem Strömungskanal (2) für ein gasförmiges Medium versehen sind, dessen dem Werkstück zugewandte Mündung (3) durch das Werkstück direkt oder durch ein dem Werkstück anliegendes Druckstück schließbar ist und dessen anderes Ende über eine Schlauchleitung (4) mit einer Druckspeiseeinrichtung (5) verbunden ist, die für jedes angeschlossene Positionierelement (1) mit einer Drosseleinrichtung und einem der Drosseleinrichtung in Strömungsrichtung des Mediums nachgeschalteten Drucksensor versehen ist, wobei der Drucksensor bei Unterschreiten eines vorgegebenen Druckwertes eine Signaleinrichtung betätigt, dadurch gekennzeichnet, daß das Positionierelement (1) als Pendelauflage ausgebildet ist, bei welcher eine die Anlagefläche (1.1) bildende, abgeflachte Kugel (12) in einem die Kugel (12) teilweise umgreifenden Lagerkörper (13) angeordnet ist, wobei die Kugel (12) in zur Anlagefläche (1.1) im wesentlichen senkrechter Richtung mit geringem Spiel beweglich ist und in ihrer zum Werkstück hin verstellten Lage einen Ringspalt zwischen ihrer Oberfläche und der Innenmantelfläche des Lagerkörpers (13) für den Durchtritt des gasförmigen Mediums öffnet.

2. Positionsüberwachungseinrichtung nach Anspruch 1, dadurch gekennzeichnet, daß der Strömungskanal (2) an seinem mündungsseitigen Ende einen Abschnitt mit vermindertem Querschnitt aufweist.

3. Positionsüberwachungseinrichtung nach Anspruch 1 oder 2, dadurch gekennzeichnet, daß die Querschnittsfläche des Strömungskanals (2) an der Mündung (3) gegenüber der Anlagefläche (1.1) um etwa einen Faktor 100 kleiner ist.

4. Positionsüberwachungseinrichtung nach einem der Ansprüche 1 bis 3, dadurch gekennzeichnet, daß der Strömungskanal (2) im Positionierelement (1) rechtwinklig verläuft, wobei das der Mündung (3) abgewandte Ende mit einem Anschlußnippel (6) für die Schlauchleitung (4) versehen ist.

5. Positionsüberwachungseinrichtung nach einem der Ansprüche 1 bis 4, dadurch gekennzeichnet, daß der Lagerkörper (13) mit wenigstens einer Austrittsöffnung (15) versehen ist, die in Strömungsrichtung des Mediums hinter dem Ringspalt in dem die Kugel (12) umgreifenden Kragen (16) angeordnet ist.

## Claims

1. A position monitoring apparatus for use on a workpiece receiving means which serves for holding and clamping workpieces which are to be fed in particular to a numerically controlled workpiece processing machine, having positioning elements (1) which can be connected to the workpiece receiving means, with contact surfaces (1.1) for the workpiece, wherein the positioning elements (1) are provided with a flow duct (2) for a gaseous medium, whose mouth opening (3) which is towards the workpiece can be closed by the workpiece directly or by a pressure portion bearing against the workpiece, and whose other end is connected by way of a hose line (4) to a pressure feed means (5) which for each connected positioning element (1) is provided with a throttle means and a pressure sensor disposed downstream of the throttle means in the direction of flow of the medium, wherein the pressure sensor actuates a signal means when the pressure falls below a predetermined pressure value, characterised in that the positioning element (1) is in the form of a swing support in which a flattened ball (12) forming the contact surface (1.1) is arranged in a support body (13) which partially embraces the ball (12), wherein the ball (12) is movable with slight clearance in a direction substantially perpendicular to the contact surface (1.1) and in its position of being displaced towards the workpiece opens an annular gap between its surface and the inside peripheral surface of the support body (13) for the gaseous medium to pass therethrough.

2. A position monitoring apparatus according to claim 1 characterised in that the flow duct (2) has a portion of reduced cross-section at its end towards the mouth opening.

3. A position monitoring apparatus according to claim 1 or claim 2 characterised in that the cross-sectional area of the flow duct (2) is smaller by approximately a factor of 100 at the mouth opening (3) than the contact surface (1.1).

4. A position monitoring apparatus according to one of claims 1 to 3 characterised in that the flow duct (2) extends at a right angle in the positioning element (1), wherein the end remote from the mouth opening (3) is provided with a connecting nipple (6) for the hose line (4).

5. A position monitoring apparatus according to one of claims 1 to 4 characterised in that the support body (13) is provided with at least one outlet opening (15) which in the flow direction of the medium is arranged downstream of the annular gap in the collar (16) which embraces the ball (12).

## Revendications

1. Dispositif de surveillance de position destiné à être utilisé sur un porte-pièce servant à supporter et à brider notamment des pièces à charger sur une machine d'usinage à commande numérique, avec des éléments de positionnement (1) qui peuvent être reliés au porte-pièce et sont pourvus de surfaces d'appui (1.1) pour la pièce, les éléments de positionnement (1) étant pourvus d'un canal d'écoulement pour un fluide gazeux dont l'embouchure (3) tournée vers la pièce peut être fermée directement par la pièce ou par un élément de pression en contact avec la pièce et dont l'autre extrémité est connectée par l'intermédiaire d'une conduite flexible (4) à un dispositif (5) d'alimentation en pression qui, pour chaque élément de positionnement (1) connecté, comporte un dispositif d'étranglement et un capteur de pression disposé en aval dudit dispositif d'étranglement dans la direction d'écoulmeent du fluide, le capteur de pression activant un dispositif de génération de signal lorsque la pression chute en-dessous d'une valeur prédéterminée, caractérisé par le fait que l'élément de positionnement (1) est agencé sous forme de support oscillant dans lequel une sphère (12) aplatie qui constitue la surface d'appui (1.1) est montée dans un corps formant palier (13) qui entoure partiellement ladite sphère (12), la sphère (12) pouvant se déplacer avec un faible jeu dans une direction sensiblement perpendiculaire à la surface d'appui (1.1) et une fente annulaire de passage du fluide gazeux étant formée entre la surface de la sphère et la surface intérieure du corps formant palier (13), dans la position décalée en direction de la pièce.

2. Dispositif de surveillance de position selon la revendication 1, caractérisé par le fait que le canal d'écoulement (2), à son extrémité côté embouchure, présente un tronçon de section réduite.

3. Dispositif de surveillance de position selon la revendication 1 ou 2, caractérisé par le fait que la surface en section transversale du canal d'écoulement (2), au niveau de l'embouchure (3), est plus faible d'un facteur d'environ 100 par rapport à la surface d'appui (1.1).

4. Dispositif de surveillance de position selon l'une des revendications 1 à 3, caractérisé par le fait que le canal d'écoulement (2) dans l'élément de positionnement (1) s'étend à angle droit, l'extrémité éloignée de l'embouchure (3) étant pourvue d'un élément de raccordement (6) pour la conduite flexible (4).

5. Dispositif de surveillance de position selon l'une des revendications 1 à 4, caractérisé par le fait que le corps formant palier (13) est pourvu d'au moins un orifice de sortie (15) qui, dans la direction d'écoulement est situé derrière la fente annulaire, dans le collet (16) entourant la sphère (12).
